# NEUE EUROPÄISCHE PATENTSCHRIFT

(11) **EP 3 094 493 B2**
(45) Veröffentlichungstag und Bekanntmachung des Hinweises auf die Entscheidung über den Einspruch: **03.09.2025**
(45) Hinweis auf die Patenterteilung: 11.10.2017
(21) Anmeldenummer: 14700959.1
(22) Anmeldetag: 14.01.2014
(51) Int. Cl.: B32B 21/00, B32B 27/10, B32B 27/18, B32B 27/30, B32B 27/34, B32B 27/42, B32B 29/06

(54) **MEHRSCHICHTIGE BAUPLATTE FÜR DEN INNEN- UND AUSSENBEREICH**
LAYERED BUILDING BOARD FOR INSIDE AND OUTSIDE
PANNEAU DE CONSTRUCTION MULTICOUCHE POUR L'INTÉRIEUR ET L'EXTÉRIEUR

(43) Veröffentlichungstag der Anmeldung: 23.11.2016
(73) Patentinhaber: Kronoplus Technical AG, 9052 Niederteufen (CH)
(72) Erfinder: DÖHRING, Dieter, 9052 Niederteufen (CH); BIEHLER, Manfred, 67056 Ludwigshafen (DE)
(74) Vertreter: Mader, Joachim
(86) Internationale Anmeldenummer: PCT/EP2014/000073
(87) Internationale Veröffentlichungsnummer: WO 2015/106771

(56) Entgegenhaltungen:
- EP-A1- 2 700 508
- WO-A1-2004/103700
- WO-A1-2010/088769
- DE-U1- 202004 002 832
- US-B1- 6 689 451

## Beschreibung

### 1. Gebiet der Erfindung

Die vorliegende Erfindung betrifft eine mehrschichtige Platte, , sowie ein Verfahren zur Herstellung einer mehrschichtigen Bauplatte.

### 2. Hintergrund

Bauplatten, wie sie von der vorliegenden Erfindung verbessert werden sollen, haben zahlreiche Anwendungen im Innen- und Außenausbau von Gebäuden. Als Fassadenplatten dienen sie beispielsweise der optischen Verkleidung von Gebäudefassaden aus ästhetischen Gründen und/oder zum Schutz der Gebäudesubstanz vor Witterungseinflüssen.

Als Fassadenplatte ist die Verwendung von Faserzement weit verbreitet. Faserzement ist der Oberbegriff für Verbundwerkstoffe aus Zement und zugfesten Fasern, wie sie beispielsweise unter dem Markennamen Eternit vertrieben werden. Als Fassadenplatten sind außerdem Schichtstoffplatten (auch als High Pressure Laminate (HPL)) weit verbreitet, die auf einem Kern aus mehreren Lagen von mit Phenolharzen getränkten Kraftpapier basieren. Auf Vorder- und Rückseite dieses Kerns ist ein Dekorpapier aufgebracht, das in der Regel mit einem Melaminharz imprägniert ist. Kernlagen und Dekorlagen werden in Hochdruckpressen bei erhöhter Temperatur und einem spezifischen Pressdruck zwischen 70 - 100 bar verpresset. Ein großer Teil der verwendeten Dekore hat jedoch keinen ausreichenden Witterungsschutz. Durch UV-Strahlung der Sonne kommt es im Laufe der Zeit daher zu Farbveränderungen insbesondere durch ein Angreifen der Farbpigmente. Um eine ausreichende Farbstabilität und damit Langlebigkeit der Fassadenplatten zu erreichen, haben sich verschiedene Lösungen etabliert. Ein bekanntes Verfahren besteht darin, zusätzlich auf das Dekorpapier eine spezielle Polymethylmethacrylatfolie aufzulegen und mit zu verpressen. Diese PMMA-Folie enthält UV-Filter mit denen bis zu 99 % der UV-Strahlung absorbiert werden kann. Derartige PMMA-Folien sind beispielsweise unter dem Handelsnamen Korad-Folie bekannt. Der Nachteil dieser Folien besteht darin, dass sie mit einem speziellen Silikontrennpapier verpresst werden müssen. Das führt zu relativ stark glänzenden Oberflächen, was optisch unerwünscht ist. Außerdem ist die PMMA-Folie relativ weich, so dass derartige Platten eine unzureichende Kratzfestigkeit aufweisen. Zudem lassen sich die Oberflächen schwer reinigen, insbesondere lässt sich Graffiti nur schwierig entfernen.

Um diese Nachteile zu vermeiden wurden bestimmte Verfahren entwickelt. Bei einem Verfahren werden beispielsweise die Dekorpapiere in einem ersten Schritt mit einem Melaminharz imprägniert und getrocknet. In einem zweiten Schritt werden diese Dekorimprägnate durch einen Lackkanal gefahren, wobei einseitig ein spezielles thermohärtendes Acrylatharz aufgetragen wird, das das UV-Filtersystem bereits enthält. Anschließend erfolgt das Verpressen wie oben beschrieben. Bei einem weiteren Verfahren wird der Phenolharzkern mit elektronenstrahllackierten Dekorfolien kombiniert.

Bauplatten, die zur Herstellung von Fußböden geeignet sind, sind beispielsweise aus der WO 2007/042258 A1 vorbekannt. Hier wird ein Verfahren zur Direktbeschichtung einer Holzwerkstoffplatte beschrieben, bei dem in einem einzigen Beschichtungsschritt eine relativ dicke Schutzschicht aus Kunststoffmaterial auf die Oberfläche einer Platte aufgetragen wird. Das verwendete Kunststoffmaterial ist dabei ein polymerisationsfähiges Acrylatsystem, das über eine Polymerisation aushärtet. Die Polymerisation wird dabei durch Bestrahlung ausgelöst, so dass durch die Dicke der aufgetragenen Schicht ein vollständiger Umsatz stattfindet.

In der WO 2008/061791 A1 desselben Anmelders ist eine Weiterentwicklung des bekannten Standes der Technik beschrieben. Der Kern der Verbesserung dieser Druckschrift liegt darin, dass auf die Oberfläche einer Platte mindestens zwei flüssige Polymerschichten nass-in-nass aufgetragen werden, so dass eine teilweise Vermischung der Beschichtungsmittel stattfindet. Diese beiden nass-in-nass aufgetragenen Schichten werden dann gemeinsam ausgehärtet, wobei die ausgehärtete resultierende Beschichtung aufgrund der teilweisen Durchmischung einen Härtegradient aufweist, bei dem die Härte der Beschichtung mit zunehmender Tiefe, von der Oberfläche der resultierenden Beschichtung her gesehen, abnimmt.

Die vorliegende Erfindung stellt sich daher die Aufgabe, den vorbekannten Stand der Technik zu verbessern und insbesondere eine mehrschichtige Bauplatte für den Innen- und Außenbereich bereitzustellen, bei der die Schichten eine sehr gute Haftfestigkeit aufweisen, und bei der in die Zwischenschichten vorzugsweise ein Dekordruck direkt ohne Papierträger eingebracht werden kann. Weiter ist es wünschenswert, dass die Oberflächen verbesserte Eigenschaften haben, wie insbesondere eine verbesserte Kratz- und Scheuerfestigkeit, und dabei leicht zu reinigen sind. Die Nachteile aus dem aufgeführten Stand der Technik können gemäß der Erfindung durch spezielle chemische Strukturmerkmale beseitigt werden.

Diese und andere Aufgaben, die beim Lesen der folgenden Beschreibung noch genannt werden oder vom Fachmann erkannt werden können, werden mit einer mehrschichtigen Platte nach Anspruch 1 und einem Verfahren nach Anspruch 12 gelöst.

### 3. Ausführliche Beschreibung der Erfindung

Die Platte umfasst einen Kern, auf der (zumindest) ein mit einem duromeren Harz, insbesondere Aminoharz imprägniertes Papier angeordnet ist. Derartige Papiere weisen nach Aushärtung des Harzes hervorragende mechanische Eigenschaften auf, jedoch lassen sich die Oberflächen nur schlecht beschichten, da die meisten gängigen Materialien, und insbesondere Acrylate, nur schlecht auf diesen duromeren Harzoberflächen, insbesondere auf Melaminharzbasis haften. Zur Lösung dieses Problems stellt die Erfindung eine besondere Haftschicht bereit, die auf einer Mischung von Isocyanaten und (Meth)Acrylaten (unter (Meth)Acrylaten werden hierin sowohl Methacrylate, Acrylate als auch Mischungen aus beiden Verbindungsgruppen verstanden) und gegebenenfalls Katalysatoren und/ oder Initiatoren sowie lackspezifischen Zusätzen basiert. Diese Mischung wird auf die gehärtete Plattenoberfläche aufgetragen, z.B. aufgewalzt, aufgesprüht oder aufgegossen und mit energiereicher Strahlung bevorzugt teilweise ausgehärtet. Diese Haftschicht kann in einem Prozessschritt aufgetragen werden, man kann aber auch mehrere dünnere Schichten der gleichen oder ähnlicher Mischungen nacheinander auftragen, wobei die Zwischenschichten mittels energiereicher Strahlung, bevorzugt UV-Strahlung angeliert werden. Im Weiteren wird diese Schicht allgemein als Haftschicht bezeichnet. Auf dieser Haftschicht wird nach dem teilweisen Aushärten eine weitere (Meth)Acrylatschicht angeordnet, die bevorzugt eine Dicke von mehr als 20 µm hat, mehr bevorzugt von mehr als 30 µm und am meisten bevorzugt von mehr als 40 µm.

Die Haftschicht und die aufgebrachte weitere (Meth)Acrylatschicht werden in einem weiteren Schritt dann gemeinsam gehärtet, beispielsweise mittels UV-Bestrahlung. In einer wesentlich langsamer verlaufenden Parallelreaktion wird das Isocyanat unter anderem mit den Hydroxylgruppen des Acrylats unter Ausbildung von Urethanbindungen umgesetzt. Diese Reaktion ist nach ca. 10 Tagen abgeschlossen, so dass nach diesem Zeitraum die Haftschicht Polyurethan und Acrylat enthält. Das Isocyanat ist dann vollständig umgesetzt und am Produkt nicht mehr nachweisbar.

Es hat sich gezeigt, dass mithilfe dieser Haftschicht (Meth)Acrylatschichten sehr gut auf der Melaminharzoberfläche der Bauplatte haften, so dass beispielsweise die Anforderungen nach EN438 für Außenanwendungen von derartig hergestellten Bauplatten vollumfänglich erfüllt werden.

Die Haftschicht wird vorzugsweise in einer Stärke von 10 bis 100 µm aufgetragen, mehr bevorzugt von 10 bis 80 µm, noch mehr bevorzugt von 15 bis 70 µm und am meisten bevorzugt von 20 bis 60 µm. Nach der vollständigen Reaktion des Isocyanats mit den reaktiven Gruppen der Bindemittelmatrix, insbesondere den Hydroxylgruppen des (Meth)Acrylats besteht die Haftschicht vorzugsweise im Wesentlichen aus einer Polymermischung aus Polyurethan und Poly(Meth)Acrylat. Eine vollständige Reaktion des Isocyanates wird auch dadurch abgesichert, dass eventuell noch nicht umgesetzte Isocyanatgruppen mit Luftfeuchte abreagieren. Auch wenn die Polyurethanreaktion direkt nach dem Herstellprozess noch nicht abgeschlossen ist, kann die Verarbeitung unmittelbar erfolgen, da die (Meth)Acrylatkomponente polymerisiert wurde und so ein Stützgerüst bildet, in das das Isocyanat eingeschlossen ist und wie beschrieben langsam zu Polyurethan umgesetzt wird.

Erfindungsgemäße wird zwischen der Haftschicht und der darauf aufgebrachten (Meth)Acrylatschicht eine Dekorschicht aufgebracht. Die Dekorschicht besteht erfindungsgemäß aus der Dekorfarbe selbst. Mit anderen Worten, die Dekorschicht ist nicht aus einem Dekorpapier gebildet, wie es bei handelsüblichen Laminatpanelen üblicherweise der Fall ist, sondern sie wird direkt vorzugsweise im Digitaldruck auf die teilweise ausgehärtete Haftschicht aufgedruckt.

Besonders bevorzugt wird als Dekorfarbe eine polymerisierbare Dekorfarbe verwendet. Derartige polymerisierbare Druckfarben verbessern die mechanischen Eigenschaften der mehrschichtigen Platte. Es wird vermutet, dass durch die Polymerisationsreaktion der Dekorfarbe eine, zumindest an den Grenzbereichen, chemische Reaktion mit den (Meth)Acrylatbestandteilen der Haftschicht und der darauf später aufgebrachten (Meth)Acrylatschicht stattfindet, die für eine verbesserte Anhaftung der verschiedenen Schichten ursächlich ist.

Die Haftschicht besteht vorzugsweise aus einer Kombination aus mindestens einem (Meth)Acrylat, mindestens einem trimeren Polyisocyanat, mindestens einem Photoinitiator und gegebenenfalls einem oder mehrerer Zusätze zur Verbesserung der Applikationseigenschaften wie zum Beispiel Formulierungsadditive oder Kondensationsharze.

Bei der (Meth)Acrylat- Komponente handelt es sich generell bevorzugt um mindestens ein monofunktionelles Alkyl(meth)acrylat, das eine Glastemperatur von nicht mehr als 0°C aufweist. Bevorzugt handelt es sich bei dem Alkyl(meth)acrylat um (Meth)Acrylsäureester von Alkanolen, die 2 bis 12 Kohlenstoffatome aufweisen. Besonders bevorzugt weisen die Alkyl(meth)acrylate einen Siedepunkt bei Normaldruck von mindestens 140°C auf, ganz besonders bevorzugt von mindestens 200°C. Dies bewirkt eine niedrige Flüchtigkeit der Alkyl(meth)acrylate. Ganz besonders bevorzugt ist die Komponente ausgewählt aus der Gruppe bestehend aus Ethylacrylat, Propylacrylat, n-Butylacrylat, n-Hexylacrylat, n-Octylacrylat, 2-Ethylhexylacrylat, 3-Propylheptylacrylat, n-Decylacrylat, Laurylacrylat, n-Pentylmethacrylat, n-Octylmethacrylat, n-Decylmethacrylat und Laurylmethacrylat, Butyl(meth)acrylat, 2-Ethylhexyl-acrylat oder 3-Propylheptylacrylat.

Bei der Polyisocyanatkomponente handelt es sich generell bevorzugt um aliphatische oder cycloaliphatische Verbindungen, die hierin kurz als (cyclo)-aliphatisch bezeichnet werden. Bevorzugt werden Di- und Polyisocyanate mit einer NCO Funktionalität von mindestens 1,8, mehr bevorzugt von 1,8 bis 5 und besonders bevorzugt 2 bis 4, sowie deren Isocyanurate, Biurete, Allophanate und Uretdione, die aus diesen zugrundeliegenden Di-Isocyanaten in monomerer Form durch Oligomerisierung erhalten werden können. Der Gehalt an Isocyanatgruppen, berechnet als NCO = 42 g/mol, beträgt in der Regel von 5 bis 25 Gew% des oligomeren Isocyanats.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,6-Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(iso-cyanatomethyl)cyclohexan (Isophorondiisocyanat), 1,3- oder 1,4-Bis(isocyanatomethyl)cyclo-hexan oder 2,4-, oder 2,6-Diisocyanato-1-methylcyclohexan. Es können auch Gemische der genannten Diisocyanate vorliegen. Bevorzugt sind Hexamethylendiisocyanat, 1,3-Bis(isocyanatomethyl)cyclohexan, Isophorondi-isocyanat und Di(isocyanatocyclohexyl)methan, besonders bevorzugt ist Hexamethylendiisocyanat.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretoniminmodi-fizierte Polyisocyanate von aliphatischen Diisocyanaten mit insgesamt 6 bis 20 C-Atomen und/oder cycloaliphatischen Diisocyanaten mit insgesamt 6 bis 20 C-Atomen in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin allgemein bevorzugt sind:
1) Isocyanuratgruppen aufweisende Polyisocyanate von aliphatischen und/oder cycloaliphatischen Diisocyanaten. Besonders bevorzugt sind hierbei die entsprechenden aliphatischen oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanato-cycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aliphatisch und/oder cycloaliphatisch gebundenen Isocyanatgruppen, vorzugsweise aliphatisch oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 25 Gew.-% und eine mittlere NCO-Funktionalität von 3 bis 4,5 auf.
4) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische, oder bevorzugt mit mindestens einer Verbindung (C2), bevorzugt 2-Hydroxyethyl(meth)acrylat, erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von mindestens 2, bevorzugt mindestens 2,1 und besonders bevorzugt 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar. Dabei ist jedoch gegebenenfalls der oben angeführte Gehalt an Oxadiazintriongruppen zu berücksichtigen.
6) Uretonimin-modifizierte Polyisocyanate.
   Die Polyisocyanate 1) bis 6) können im Gemisch, gegebenenfalls auch im Gemisch mit Diisocyanaten, eingesetzt werden.

Als Photoinitiatoren können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, *α* - Hydroxy-alkyl-aryl-ketone, Thioxanthone, Anthrachinone, Acetophenone, Benzoine und Benzoinether, Ketale, Imidazole oder Phenylglyoxylsäuren.

In Betracht kommen auch Photoinitiatoren, wie sie in WO 2006/005491 A1, Seite 21, Zeile 18 bis Seite 22, Zeile 2 beschrieben sind.

Beispielhaft genannt seien für die einzelnen Klassen folgende Verbindungen:
Mono- oder Bisacylphosphinoxide, wie z.B. Irgacure^{®} 819 (Bis(2,4,6-Trimethylbenzoyl)phenyl-phosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO), Ethyl-2,4,6-trimethylbenzoylphenylphosphinat, Bis(2,6-dimethoxybenzoyl)-2,4,4-trimethylpentylphosphinoxid,
Benzophenon, 4-Aminobenzophenon, 4,4'-Bis(dimethylamino)benzophenon, 4-Phenylbenzo-phenon, 4-Chlorbenzophenon, Michlers Keton, o-Methoxybenzophenon, 2,4,6-Trimethylbenzo-phenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon,
1-Benzoylcyclohexan-1-ol (1-Hydroxy-cyclohexyl-phenylketon), 2-Hydroxy-2,2-dimethylaceto-phenon (2-Hydroxy-2-methyl-1-phenyl-propan-1-on), 1-Hydroxyacetophenon, 1-[4-(2-Hydroxy-ethoxy)-phenyl]-2-hydroxy-2-methyl-1-propan-1-on, Polymeres, das 2-Hydroxy-2-methyl-1-(4-isopropen-2-yl-phenyl)-propan-1-on einpolymerisiert enthält (Esacure^{®} KIP 150),
10-Thioxanthenon, Thioxanthen-9-on, Xanthen-9-on, 2,4-Dimethylthioxanthon, 2,4-Diethylthio-xanthon, 2,4-Di-isopropylthioxanthon, 2,4-Dichlorthioxanthon, Chloroxanthenon,
*β* -Methylanthrachinon, tert-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-tert-Butylanthrachinon, 1-Chloranthrachinon, 2-Amylanthrachinon,
Acetophenon, Acetonaphthochinon, Valerophenon, Hexanophenon, *α* - Phenylbutyrophenon, p-Morpholinopropiophenon, Dibenzosuberon, 4-Morpholinobenzophenon, p-Diacetylbenzol, 4'-Methoxyacetophenon, *α* -Tetralon, 9-Acetylphenanthren, 2-Acetylphenanthren, 3-Acetylphe-nanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on, 2-Benzyl-2-dimethylamino-1-(4-morpholinophenyl)-butan-1-on,
4-Morpholinodeoxybenzoin, Benzoin, Benzoin-iso-butylether, Benzointetrahydropyranylether, Benzoin-methylether, Benzoin-ethylether, Benzoin-butylether, Benzoin-iso-propylether, 7-H-Benzoin-methylether,
Acetophenondimethylketal, 2,2-Diethoxyacetophenon, Benzilketale, wie Benzildimethylketal,
Phenylglyoxalsäuren wie in DE-A 198 26 712, DE-A 199 13 353 oder WO 98/33761 beschrieben, beispielsweise Phenylglyoxalsäuremono- und - diester von Polyethylenglykolen der Molmasse 62 bis 500 g/mol,
Benzaldehyd, Methylethylketon, 1-Naphthaldehyd, Triphenylphosphin, Tri-o-Tolylphosphin, 2,3-Butandion,
Als Gemisch zu nennen sind insbesondere 2-Hydroxy-2-Methyl-1-phenyl-propan-2-on und 1-Hydroxy-cyclohexyl-phenylketon,
Bis(2,6-dimethoxybenzoyl)-2,4,4-trimethylpentylphosphinoxid und 2-Hydroxy-2-methyl-1-phenyl-propan-1-on,
Benzophenon und 1-Hydroxy-cyclohexyl-phenylketon,
Bis(2,6-dimethoxybenzoyl)-2,4,4-trimethylpentylphosphinoxid und 1-Hydroxy-cyclohexyl-phenylketon,
2,4,6-Trimethylbenzoyldiphenylphosphinoxid und 2-Hydroxy-2-methyl-1-phenyl-propan-1-on,
2,4,6-Trimethylbenzophenon und 4-Methylbenzophenon,
2,4,6-Trimethylbenzophenon und 4-Methylbenzophenon und 2,4,6-Trimethylbenzoyldiphenylphosphinoxid.

Denkbar als Photoinitiatoren sind ebenfalls polymere Photoinitiatoren, wie beispielsweise der Diester von Carboxymethoxybenzophenon mit Polytetramethylenglykolen unterschiedlichen Molgewichts, bevorzugt 200 bis 250 g/mol (CAS 515136-48-8), sowie CAS 1246194-73-9, CAS 813452-37-8, CAS 71512-90-8, CAS 886463-10-1 oder weitere polymere Benzophenonderivate, wie sie beispielsweise unter dem Handelsnamen Omnipol^{®} BP der Firma IGM Resins B.V., Waalwijk, Niederlande oder Genopol^{®} BP1 der Firma Rahn AG, Schweiz im Handel verfügbar sind. Denkbar sind ferner auch polymere Thioxanthone, beispielsweise der Diester von Carboxymethoxythioxanthonen mit Polytetramethylenglykolen unterschiedlichen Molgewichts, wie sie beispielsweise unter dem Handelsnamen Omnipol^{®} TX der Firma IGM Resins B.V., Waalwijk, Niederlande im Handel verfügbar sind. Denkbar sind ferner auch polymere α -Amino-ketone, beispielsweise der Diester von Carboxyethoxythioxanthonen mit Polyethylenglykolen unterschiedlichen Molgewichts, wie sie beispielsweise unter dem Handelsnamen Omnipol^{®} 910 oder Omnipol^{®} 9210 der Firma IGM Resins B.V., Waalwijk, Niederlande im Handel verfügbar sind.

Zur Verbesserung der Haftfähigkeit sowie der Applikationsfähigkeit können weiterhin z.B. Kondensationsharze, aufgebaut aus Harnstoff oder Harnstoffderivaten und Keton oder Aldehyden welche ausgewählt sind aus C-H aciden Aldehyden bzw. Ketonen oder deren Gemische mit Formaldehyd eingesetzt werden. Als Formulierungsadditive können lackübliche Formulierungsadditive wie z.B. Entschäumer, Entlüfter, Dispergieradditive ,Verlaufsadditive u.s.w. zum Einsatz kommen.

Der Kern ist vorzugsweise eine relativ steife Platte mit einer Dicke von 2 bis 50 mm, bevorzugt von 3 bis 50 mm und am meisten bevorzugt von 4 bis 50 mm. Als Ausgangsbasis für den Kern kann beispielsweise eine Schichtstoffplatte, d. h. eine aus mehreren mit Phenolharz getränkten Papierschichten bestehende Platte (auch als High Pressure Laminate - HPL - bezeichnet) gewählt werden. Weitere bevorzugte Materialien sind Medium Density Fiberboards (MDF) oder High Density Fiberboards (HDF), aber auch Holzwerkstoffe oder PVC-Platten.

In der vollständig ausgebildeten Haftschicht, in der also das Isocyanat vollständig reagiert ist, beträgt der Gewichtsanteil des Polyurethans vorzugsweise mehr als 5 %, mehr bevorzugt mehr als 20 % und am meisten bevorzugt mehr als 40 %.

Um die UV-Beständigkeit einer derartig hergestellten Bauplatte zu erhöhen, können zusätzliche Additive zugegeben werden, wie beispielsweise Radikalfänger und UV-Absorber als Witterungsschutz für Außenanwendungen oder Nanopartikel modifizierte Bestandteile zur Erhöhung der Kratz- und Mikrokratzfestigkeit. Diese Additive werden vorzugsweise der (Meth)Acrylatschicht beigegeben, die auf der Haftschicht angeordnet ist.

Die Erfindung wird in nachfolgenden Beispielen näher erläutert:

### Herstellung der Bauplatte:

Natronkraftpapier mit einer Grammatur von 150 g/m² wird mit einem handelsüblichen Phenolharz für Kompaktplatten imprägniert. Das Imprägnat hat nach der Imprägnierung eine Flächenmasse von 220 g/m². Ein weißes Dekorpapier mit einer Grammatur von 95 g/m² wird mit einem handelsüblichen Melaminharz imprägniert; die Flächenmasse dieses imprägnierten Dekorpapiers beträgt 214 g/m². In einer Legestation erfolgt folgende Kombination der imprägnierten Bahnen: Dekorbogen/ 75 Lagen Phenolharzimprägnat/ Dekorbogen (von unten nach oben). Die so kombinierten Lagen werden einer Mehretagenpresse zugeführt und wie folgt verpresst: a) Druckaufbau auf einen spezifischen Pressdruck von 8 MPa, b) aufheizen innerhalb von 8 min auf 140 °C, c) Temperatur 20 min bei 140°C belassen, d) Abkühlen auf Raumtemperatur innerhalb von 8 min, e) 5 min Konditionieren bei Raumtemperatur und f) Druckabbau auf Normaldruck und Entformen aus der Presse.

Beispiel A (nicht erfindungsgemäß): Die so hergestellte Bauplatte wird in einem Walzenauftragswerk mit einer erfindungsgemäßen Haftschicht (Haftprimer) mit einer Auftragsmenge von 15 g/m² versehen. Die Haftschicht besteht aus 35 Gewichtsteilen Laromer LR9085, 10 Gewichtsteilen Propylheptylacrylat, 2,5 Gewichtsteilen Laurylacrylat, 0,5 Gewichtsteilen EFKA3777, 0,2 Teilen TegoRad2011, 1,8 Gewichtsteilen Irgacure MBF sowie 50 Teilen Basonat HI 100. Hinter diesen Namen verbergen sich dem Fachmann bekannte handelsübliche Rohstoffe. Die Haftschicht wird mittels UV-Strahlung angeliert. In einem weiteren Verfahrensschritt wird mittels Walzenauftragswerk eine zusätzliche Acrylatschicht als Deckschicht (Decklack) mit einer Auftragsmenge von 35 g/m² aufgetragen. Die Deckschicht setzt sich wie folgt zusammen: 60,3 Gewichtsteile Laromer LR 8987, 22,2 Gewichtsteile Laromer HDDA, 2 Gewichtsteile Tinuvin 400, 1 Gewichtsteil Tinuvin 292, 10 Gewichtsteilen Ethylhexylacrylat, 2 Gewichtsteilen Irgacure TPO-L, 2 Gewichtsteilen Irgacure 184 und 0,5 Gewichtsteilen TegoRad 2010. Die aufgetragene Deckschicht wird mittels UV-Strahlung ausgehärtet.

Beispiel B (erfindungsgemäß): Die Bauplatte wird mit der Haftschicht aus Beispiel A in einer Menge von 10 g/m² mittels Walzenwerk beschichtet und der aufgetragene Haftprimer wird mittels UV-Strahlung angeliert. Auf dieser Schicht wird mit einem industriellen Digitaldrucker eine Dekorschicht, in diesem Falle eine Eichenimitation, erzeugt. Dabei werden 4,5 g/m² Digitaldrucktinte aufgeteilt auf die Farben Yellow, Mangenta, Cyan und Black aufgetragen. Diese Farben sind polymerisationsfähig und werden mittels UV-Strahlung angeliert. Im nächsten Arbeitschritt wird mittels Walzenwerk der Decklack aus Beispiel A in einer Menge von 30 g/m² appliziert. Diese Schicht wird "nass" einem Folienkalander zugeführt. Auf eine Strukturgeberfolie, in diesem Fall mit einer Eichestrukturnachbildung, wird eine zweite Schicht des Decklacks und zwar 25 g/m² aufgewalzt. Im Folienkalander werden die beiden "nassen" Schichten zusammengeführt. Die gesamte Schicht wird mittels UV-Strahlung durch die Folie durchstrahlt und damit inert gehärtet. Nach Abziehen der Folie erhält man eine dekorative Kompaktplatte, in diesem Falle eine Eichenimitation mit passender Porenstruktur.

Die in Beispiel A und B hergestellten Bauplatten werden nach 10 Tagen Lagerung einer Laborprüfung unterzogen. Dabei werden alle nach EN 438 geforderten Kennwerte sicher erreicht. Zusätzlich erfüllt die Platte die Anforderungen für die höchste Mikrokratzfestigkeitsstufe gemäß EN 16094.

### 4. Beschreibung von bevorzugten Ausführungsformen

Im Folgenden wird die vorliegende Erfindung unter Bezugnahme auf die beigefügten Figuren genauer erläutert. Hierbei zeigt:
Figur 1 schematisch den Aufbau einer mehrschichtigen Bauplatte mit Kern und Außenlagen, bestehend aus polykondensierten duromer beharzten Papieren;
Figur 2 eine mehrschichtige Platte, bei der die Haftschicht noch nicht vollständig umgesetzt ist;
Figur 3 eine erfindungsgemäße mehrschichtige Bauplatte;
Figur 4 eine weitere Ausführungsform einer mehrschichtigen Bauplatte gemäß der Erfindung; und
Figur 5 eine beispielhafte schematisch dargestellte Anlage zur Herstellung der erfindungsgemäßen Platten bzw. zur Durchführung des erfindungsgemäßen Verfahrens.

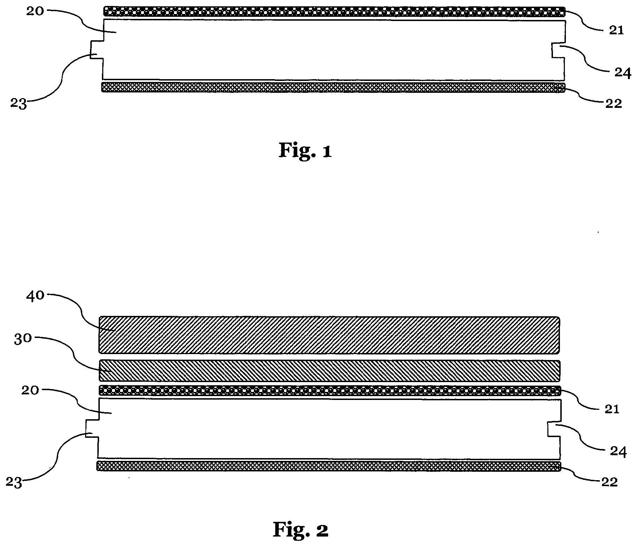

In Figur 1 ist ein schematischer Aufbau eines Kerns 20 dargestellt. Der Kern 20 weist eine Vorder- und eine Rückseite auf, wobei auf der Vorderseite ein mit einem duromeren Harz wie beispielsweise einem Melaminharz imprägniertes Papier 21 angeordnet ist und an der Rückseite ein ebenfalls mit einem duromeren Harz imprägniertes Papier 22. Der Kern 20 kann beispielsweise eine MDF- oder HDF-Platte sein.

Besonders bevorzugt besteht der Kern 20 aus einer größeren Anzahl von mit Phenolharz imprägnierten Kraftpapieren, wie etwa 20 bis 90 Papierlagen. Der in Figur 1 gezeigte Aufbau wird in einer Presse unter Einwirkung von Hitze und Druck zu einem Bauteil verpresst. Hierbei härten die verschiedenen Harze im Kern und den Deckschichten aus.

In Figur 2 ist beispielhaft ein schematischer Aufbau einer mehrschichtigen Platte ohne erfindungsgemäße Dekorschicht gezeigt. Die Platte der Figur 2 weist den Kern 20 sowie Dekorimprägnate 22 und 21 der Ausführungsform der Figur 1 auf. Diese Lagen werden vorzugsweise miteinander verpresst, bevor die Haftschicht (Haftprimer) 30 auf das Papier 21 aufgebracht wird. Die Haftschicht 30 besteht aus einer Mischung von Isocyanaten und (Meth)Acrylaten. Auf dieser Haftschicht ist eine weitere Acrylatschicht angeordnet. Allgemein bevorzugt hat die Haftschicht dabei eine Dicke (Stärke) von 10 bis 100 µm, mehr bevorzugt von 10 bis 80 µm, noch mehr bevorzugt von 15 bis 70 µm und am meisten bevorzugt von 20 bis 60 µm. Diese Dickenangaben gelten für die Haftschicht nach Aushärtung. Ebenfalls allgemein bevorzugt hat die darauf angeordnete zusätzliche Acrylatschicht 40 eine Dicke (Stärke) von mehr als 20 µm, mehr bevorzugt von mehr als 30 µm und am meisten bevorzugt von mehr als 40 µm (nach Aushärtung). Bevorzugt sollte die Dicke der Acrylatschicht 40 jedoch nicht mehr als 100 µm betragen. Die in Figur 2 beispielhaft gezeigte mehrschichtige Platte kann bereits verarbeitet werden. Die volle Haftung der einzelnen Schichten ist jedoch erst erreicht, nachdem das Isocyanat in der Haftschicht 30 vollständig mit den (Meth)Acrylatgruppen, unter Ausbildung von Polyurethan, reagiert hat. Eine beinahe vollständige Umsetzung des Isocyanats ist nach etwa 10 Tagen erreicht.

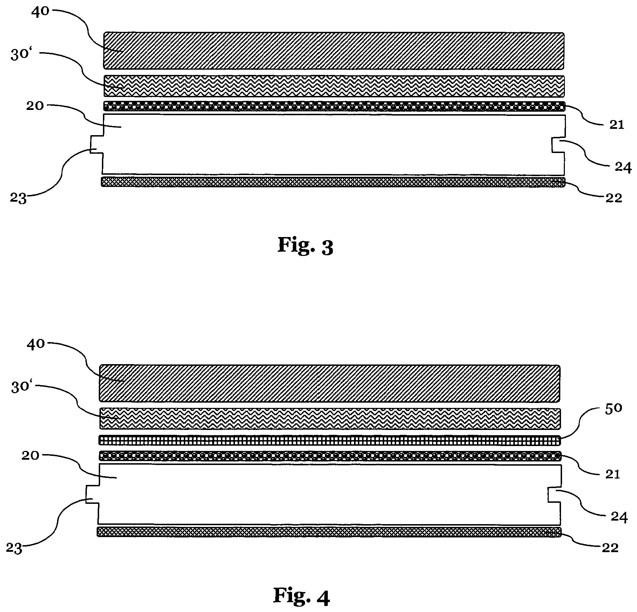

In Figur 3 ist die mehrschichtige Platte der Figur 2 nach dem vollständigen Umsetzen des Isocyanats gezeigt. Zur Veranschaulichung ist in den Figuren die Musterung der Schicht 30' anders als die der Schicht 30. Die Schicht 30' besteht wie oben dargelegt im Wesentlichen aus (Meth)Acrylaten und Polyurethan.

Figur 4 zeigt eine Ausführungsform der Erfindung ebenfalls in schematischer Ansicht. In der Ausführungsform der Figur 4 befindet sich eine Dekorschicht 50 auf dem mit einem duromeren Harz, beispielsweise Melaminharz imprägnierten Papier 21 und unterhalb der Haftschicht 30 bzw. 30'. Da die verwendeten (Meth)Acrylate für die beiden Schichten 30 und 40 vorzugsweise transparent sind, ist es somit möglich die Bauplatte mit einem beliebigen Dekor zu versehen.

In den gezeigten Ausführungsformen finden sich die Schichten jeweils nur auf der Vorderseite der Kernlage 20. Jedoch sollte es dem Fachmann klar sein, dass derselbe oder ein ähnlicher Schichtaufbau auch zusätzlich oder alternativ auf der Rückseite des Kerns vorgesehen werden kann.

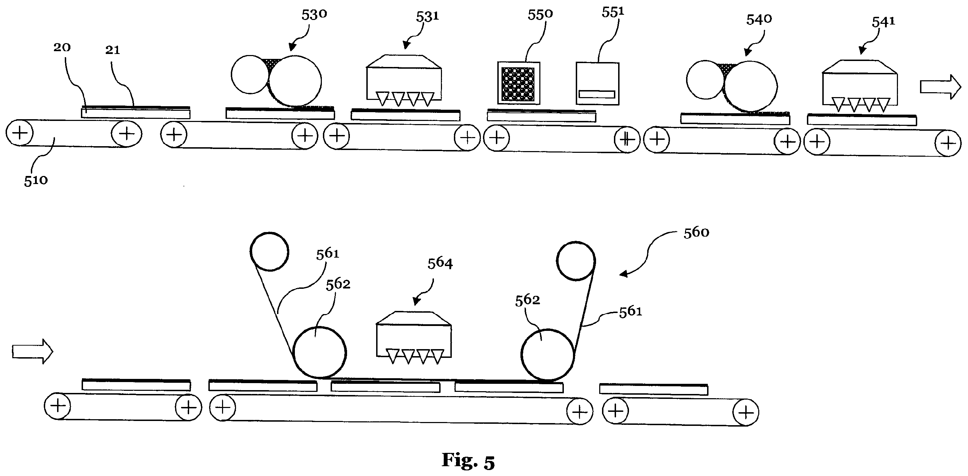

In Figur 5 ist schematisch eine Anlage dargestellt, um das erfindungsgemäße Verfahren zu veranschaulichen. Ausgangspunkt für das Verfahren ist ein Kern mit einem mit einem duromeren Harz, wie beispielsweise einem Melaminharz imprägnierten Papier 21, wobei das Melaminharz des Papiers bereits ausgehärtet ist, beispielsweise durch einen entsprechend vorgelagerten Pressvorgang (nicht dargestellt). Diese Vorstücke werden über eine Bandförderanlage 510 durch die verschiedenen Stationen geführt. In der Station 530 wird eine flüssige Mischung von Isocyanat und Acrylat aufgetragen. Diese Mischung (Haftschicht 30) wird in Station 531 angeliert, d. h. dass das in der Mischung enthaltene (Meth)Acrylat nur teilweise polymerisiert. Die Station 550 illustriert in der Figur eine Digitaldruckeinrichtung, mit der auf das Papier 21 bzw. die Haftschicht 30 ein gewünschtes Dekor gedruckt wird. Bei 551 wird die bei 550 aufgebrachte Druckfarbe vorgetrocknet. Auf diese teilweise gehärtete Schicht wird bei Station 540 dann eine weitere (Meth)Acrylatlage 40 aufgetragen und in Station 541 werden die beiden Schichten 30 und 40 durch UV-Strahlung vollständig ausgehärtet. Nach Station 541 ist die Platte bereit zur weiteren Verarbeitung. Vorzugsweise sollte jedoch mit der Weiterverarbeitung ca. 10 Tage gewartet werden, bis das Isocyanat vollständig umgesetzt ist.

In Figur 5 schließt sich an die Station 541 eine weitere Station 560 an. Die Station 560 dient dazu die oberste (Meth)Acrylatschicht 40 mit einer Struktur zu versehen. Falls eine derartige Struktur gewünscht ist, wird die Station 541 nicht in Betrieb genommen, d. h. die Acrylatschicht 40, die bei Station 540 aufgebracht wird, wird nicht in Station 541 ausgehärtet. Stattdessen ist in Station 560 eine Aushärtestation 564 vorgesehen. Mit Bezugszeichen 561 ist eine Strukturgeberfolie bezeichnet, die über Umlenkrollen 562 geführt und in Kontakt mit der Oberseite der Platten gebracht wird. Die Strukturgeberfolie 561 enthält ein Negativrelief der aufzubringenden Struktur und presst diese in die noch feuchte Acrylatschicht 40 ein. Die Aushärtestation 564 arbeitet beispielsweise mit UV-Strahlung und strahlt durch die Strukturgeberfolie 561 hindurch, die zu diesem Zweck für UV-Strahlung durchlässig ist. Am Ende der Station 560 wird die Strukturgeberfolie 561 von der Oberfläche der nun vollständig ausgehärteten Platten entfernt, so dass eine Struktur, wie beispielsweise eine dreidimensionale Holzstruktur in der Oberfläche der Platten vorhanden ist.

## Patentansprüche

1. Mehrschichtige Platte, umfassend:
• einen Kern (20) mit einer Vorder- und einer Rückseite und
• ein darauf angeordnetes Aminoharz-imprägniertes Papier (21); **dadurch gekennzeichnet, dass**
• auf dem Papier (21) eine Haftschicht (30) aus einer Mischung von Isocyanat und (Meth)Acrylat angeordnet ist; und
• darauf eine Acrylatschicht (40) angeordnet ist, und dadurch, dass
• zwischen der Haftschicht (30) und der Acrylatschicht (40) eine Dekorschicht (50) bestehend aus Dekorfarbe angeordnet ist.

2. Die mehrschichtige Platte nach Anspruch **1, dadurch gekennzeichnet, dass** die auf der Haftschicht (30) angeordnete Acrylatschicht (40) eine Dicke von mehr als 20 µm hat, mehr bevorzugt von mehr als 30 µm und am meisten bevorzugt von mehr als 40 µm hat.

3. Die mehrschichtige Platte nach Anspruch 1 oder 2, **dadurch gekennzeichnet, dass** die Haftschicht (30) eine Dicke von 10 bis 100 µm hat, mehr bevorzugt von 10 bis 80 µm, noch mehr bevorzugt von 15 bis 70 µm und am meisten bevorzugt von 20 bis 60 µm hat.

4. Die mehrschichtige Platte nach einem der Ansprüche 1 bis 3,
**dadurch gekennzeichnet, dass** die Haftschicht (30) im Wesentlichen aus Isocyanat und (Meth)Acrylat besteht.

5. Die mehrschichtige Platte nach Anspruch 1, **dadurch gekennzeichnet, dass** die Dekorfarbe auf einer polymerisierbaren Dekorfarbe basiert.

6. Die mehrschichtige Platte nach einem der Ansprüche 2 bis 4,
**dadurch gekennzeichnet, dass** das (Meth)Acrylat der Haftschicht (30) auf (Meth)Acrylsäureester von Alkanolen, die 2 bis 12 Kohlenstoffatome aufweisen, basiert.

7. Die mehrschichtige Platte nach einem der Ansprüche 1 bis 6,
**dadurch gekennzeichnet, dass** das (Meth)Acrylat der Haftschicht (30) ausgewählt ist aus der Gruppe bestehend aus: Ethylacrylat, Propylacrylat, n-Butylacrylat, n-Hexylacrylat, n-Octylacrylat, 2-Ethylhexylacrylat, 3-Propylheptylacrylat, n-Decylacrylat, Laurylacrylat, n-Pentylmethacrylat, n-Octylmethacrylat, n-Decylmethacrylat und Laurylmethacrylat, Butyl(meth)acrylat, 2-Ethylhexyl-acrylat oder 3-Propylheptylacrylat.

8. Die mehrschichtige Platte nach einem der Ansprüche 1 bis 7,
**dadurch gekennzeichnet, dass** das Isocyanat auf Di- und/oder Polyisocyanaten mit einer NCO Funktionalität von mindestens 1,8, mehr bevorzugt von 1,8 bis 5 und besonders bevorzugt 2 bis 4 basiert.

9. Die mehrschichtige Platte nach Anspruch 8, **dadurch gekennzeichnet, dass** die Diisocyanate Isocyanate mit 4 bis 20 C-Atomen sind.

10. Die mehrschichtige Platte nach Anspruch 8 oder 9, **dadurch gekennzeichnet, dass** die Polyisocyanate Isocyanuratgruppenaufweisende Polyisocyanate, Uretdiondiisocyanate, Biuretgruppenaufweisende Polyisocyanate, Urethan- oder Allophanatgruppenaufweisende Polyisocyanate, Oxadiazintriongruppen-aufweisende Polyisocyanate, Uretoniminmodi-fizierte Polyisocyanate von aliphatischen Diisocyanaten mit insgesamt 6 bis 20 C-Atomen, und/oder cycloaliphatischen Diisocyanaten mit insgesamt 6 bis 20 C-Atomen, sind.

11. Die mehrschichtige Platte nach einem der Ansprüche 2 bis 8,
**dadurch gekennzeichnet, dass** die Kernlage (20) eine Schichstoff-Platte; MDF-Platte; HDF-Platte; Holzwerkstoff-Platte oder PVC-Platte ist.

12. Verfahren zur Herstellung einer mehrschichtigen Bauplatte für den Innen- und Außenbereich, umfassend die folgenden Schritte:
a. Bereitstellen eines Kerns mit einer Vorder- und einer Rückseite und
b. Anordnen eines Aminoharz-imprägnierten Papiers auf der Vorder- und/oder Rückseite; **dadurch gekennzeichnet, dass**
c. danach auf dem Papier eine Mischung von Isocyanat und (Meth)Acrylat aufgetragen wird;
d. nach Schritt c. eine Acrylatschicht aufgetragen wird; und
e. die in Schritt c. und d. aufgetragenen Schichten gemeinsam ausgehärtet werden, und dadurch, dass
nach dem teilweisen Aushärten und vor Schritt d. eine Dekorschicht direkt auf die Schicht umfassend die Mischung von Isocyanat und (Meth)Acrylat aufgedruckt wird.

13. Verfahren zur Herstellung einer mehrschichtigen Bauplatte nach Anspruch 12, **dadurch gekennzeichnet, dass** die Mischung von Isocyanat und (Meth)Acrylat nach Schritt c. und vor Schritt d. teilweise ausgehärtet wird.

14. Verfahren zur Herstellung einer mehrschichtigen Bauplatte nach einem der vorhergehenden Verfahrensansprüchen, **dadurch gekennzeichnet, dass** die Mischung von Isocyanat und (Meth)Acrylat mittel Auftragswalzen aufgetragen wird.

15. Verfahren zur Herstellung einer mehrschichtigen Bauplatte nach einem der vorhergehenden Verfahrensansprüchen, **dadurch gekennzeichnet, dass** nach Schritt d. und vor Schritt e. die aufgetragene Acrylatschicht mit einer Struktur versehen wird.

16. Verfahren zur Herstellung einer mehrschichtigen Bauplatte nach einem der vorhergehenden Verfahrensansprüchen, **dadurch gekennzeichnet, dass** die in Schritt d. aufgetragene Acrylatschicht eine Dicke von mehr als 20 µm hat, mehr bevorzugt von mehr als 30 µm und am meisten bevorzugt von mehr als 40 µm hat.

17. Verfahren zur Herstellung einer mehrschichtigen Bauplatte nach einem der vorhergehenden Verfahrensansprüchen, **dadurch gekennzeichnet, dass** die Haftschicht eine Dicke von 10 bis 100 µm hat, mehr bevorzugt von 10 bis 80 µm, noch mehr bevorzugt von 15 bis 70 µm und am meisten bevorzugt von 20 bis 60 µm hat.

18. Verfahren zur Herstellung einer mehrschichtigen Bauplatte nach Anspruch 12, **dadurch gekennzeichnet, dass** die Dekorfarbe für die Dekorschicht auf einer polymerisierbaren Dekorfarbe basiert.

19. Verfahren zur Herstellung einer mehrschichtigen Bauplatte nach einem der vorhergehenden Verfahrensansprüchen, **dadurch gekennzeichnet, dass** der Kern eine Dicke von 2 bis 50 mm hat, bevorzugt von 3 bis 50 mm und am meisten bevorzugt von 4 bis 50 mm.

20. Verfahren zur Herstellung einer mehrschichtigen Bauplatte nach einem der vorhergehenden Verfahrensansprüchen, **dadurch gekennzeichnet, dass** der Kern eine Schichtstoff-Platte; MDF-Platte; HDF-Platte; Holzwerkstoff-Platte, oder PVC-Platte ist.

## Claims

1. Multi-layered board comprising;
• a core (20) with a front side and a rear side and
• an amino resin impregnated paper (21) arranged thereon, **characterized in that**
• an adhesion layer (30) of a mixture of isocyanate and (meth)acrylate is arranged on the paper (21); and
• an acrylate layer (40) is arranged thereon, and **in that**
• a décor layer (50) consisting of décor color is provided between the adhesion layer (30) and the acrylate layer (40).

2. The multi-layered board according to claim 1, **characterized in that** the acrylate layer (40), which is arranged on the adhesion layer (30), has a thickness of more than 20 µm, preferably more than 30 µm and most preferred of more than 40 µm.

3. The multi-layered board, according to claim 1 or 2, **characterized in that** the adhesion layer (30) has a thickness of 10 to 100 µm, more preferred of 10 to 80 µm, even more preferred of 15 to 70 µm and most preferred of 20 to 60 µm.

4. The multi-layered board according to one of the claims 1 to 3, **characterized in that** the adhesion layer (30) essentially consists of isocyanate and (meth-) acrylate.

5. The multi-layered board according to claim 1, **characterized in that** the décor layer bases on a polymerizable décor color.

6. The multi-layered board according to one of the claims 2 to 4, **characterized in that** the (meth)acrylate of the adhesion layer (30) bases on (meth)acrylic acid ester of alkanols that comprise 2 to 12 carbon atoms.

7. The multi-layered board according to one of the claims 1 to 6, **characterized in that** the (meth)acrylate of the adhesion layer (30) is chosen from the group consisting of: ethylacrylate, propylacrylate, n-butylacrylate, n-hexylacrylate, n-octylacrylate, 2-ethylhexylacrylate, 3-propylheptylacrylate, n-decylacrylate, laurylacrylate, n-pentylmethacrylate, n-octylmethacrylate, n-decylmethacrylate and laurymethacrylate, butyl(meth)acrylate, 2-ethylhexylacrylate or 3-propylheptylacrylate.

8. Multi-layered board according to one of the claims 1 to 7, **characterized in that** the isocyanate bases on di- and/or poly-isocyanates with a NCO functionality of at least 1.8, more preferred of 1.8 to 5 and most preferred of 2 to 4.

9. The multi-layered board according to claim 8, **characterized in that** the diisocyanates are isocyanates with 4 to 20 C-atoms.

10. The multi-layered board according to claim 8 or 9, **characterized in that** the polyisocyanates are polyisocyanates comprising isocyanurate groups, uretdione diisocyanates, polyisocyanates comprising biuret groups, polyisocyanates comprising urethane or allophanate groups, polyisocyanates comprising oxadiazintrione groups, uretonimine-modified polyisocyanates of aliphatic diisocyanates with a total of 6 to 20 C-atoms, and/or cycloaliphatic diisocyanates with a total of 6 to 20 C-atoms.

11. The multi-layered board, according to one of the claims 2 to 8, **characterized in that** the core layer (20) is a laminate board; a MDF-board; a HDF-board; a wood based material board or a PVC-board.

12. Method for manufacturing a multi-layered building board for inside and outside comprising the following steps:
a. providing a core with a front side and a rear side and
b. providing an amino resin impregnated paper on the front- and/or rear side;
**characterized in that**
c. a mixture of isocyanate and (meth)acrylate is provided on the paper thereafter;
d. an acrylate layer is applied after step c; and
e. the layers applied in step c. and d. are cured together, and **in that**
a décor layer is directly printed on the layer comprising the mixture of isocyanate and (meth)acrylate after the partial curing and before step d.

13. Method for manufacturing a multi-layered building board according to claim 12,
**characterized in that** the mixture of isocyanate and (meth)acrylate is partially cured after step c. and before step d.

14. Method for manufacturing a multi-layered building board according to one of the preceding method claims, **characterized in that** the mixture of isocyanate and (meth)acrylate is applied by applicator rollers.

15. Method for manufacturing a multi-layered building board according to one of the preceding method claims, **characterized in that** the applied acrylate layer is provided with a structure after step d. and before step e.

16. Method for manufacturing a multi-layered building board according to one of the preceding method claims, **characterized in that** the acrylate layer applied in step d. has a thickness of more than 20 µm, more preferred of more than 30 µm and most preferred of more than 40 µm.

17. Method for manufacturing a multi-layered building board according to the preceding method claims, **characterized in that** the adhesion layer has a thickness of 10 to 100 µm, more preferred of 10 to 80 µm, even more preferred of 15 to 70 µm, and most preferred of 20 to 60 µm.

18. Method for manufacturing a multi-layered building board according to claim 12,
**characterized in that** the décor color for the décor layer bases on a polymerizable décor color.

19. Method for manufacturing a multi-layered building board according to one of the preceding method claims, **characterized in that** the core has a thickness of 2 to 50 mm, preferably of 3 to 50 mm and most preferred of 4 to 50 mm.

20. Method for manufacturing a multi-layered building board according to one of the preceding method claims, **characterized in that** the core is a laminate board; a MDF-board; a HDF-board; a wood based material board, or a PVC-board.

## Revendications

1. Plaque multicouche, comprenant :
• une âme (20), présentant une face avant et une face arrière,
• un papier (21), imprégné d'une résine aminée, disposé par-dessus ; **caractérisée en ce que**
• sur le papier (21) est disposée une couche d'adhérence (30) en un mélange d'un isocyanate et d'un (méth)acrylate ; et
• une couche d'acrylate (40) est disposée par-dessus, et **en ce que**
• entre la couche d'adhérence (30) et la couche d'acrylate (40) est disposée une couche décorative (50) constituée d'une peinture décorative.

2. Plaque multicouche selon la revendication 1, **caractérisée en ce que** la couche d'acrylate (40) disposée sur la couche d'adhérence (30) a une épaisseur supérieure à 20 µm, d'une manière plus préférée supérieure à 30 µm et de la manière la plus préférée supérieure à 40 µm.

3. Plaque multicouche selon la revendication 1 ou 2, **caractérisée en ce que** la couche d'adhérence (30) a une épaisseur de 10 à 100 µm, d'une manière plus préférée de 10 à 80 µm, d'une manière encore plus préférée de 15 à 70 µm et de la manière la plus préférée de 20 à 60 µm.

4. Plaque multicouche selon l'une des revendications 1 à 3, **caractérisée en ce que** la couche d'adhérence (30) est pour l'essentiel constituée d'un isocyanate et d'un (méth)acrylate.

5. Plaque multicouche selon la revendication 1, **caractérisée en ce que** la peinture décorative est à base d'une peinture décorative polymérisable.

6. Plaque multicouche selon l'une des revendications 2 à 4, **caractérisée en ce que** le (méth)acrylate de la couche d'adhérence (30) est à base d'un ester de l'acide (méth)acrylique et d'alcanols ayant 2 à 12 atomes de carbone.

7. Plaque multicouche selon l'une des revendications 1 à 6, **caractérisée en ce que** le (méth)acrylate de la couche d'adhérence (30) est choisi dans le groupe consistant en l'acrylate d'éthyle, l'acrylate de propyle, l'acrylate de n-butyle, l'acrylate de n-hexyle, l'acrylate de n-octyle, l'acrylate de 2-éthylhexyle, l'acrylate de 3-propylheptyle, l'acrylate de n-décyle, l'acrylate de lauryle, le méthacrylate de n-pentyle, le méthacrylate de n-octyle, le méthacrylate de n-décyle et le méthacrylate de lauryle, le (méth)acrylate de butyle, l'acrylate de 2-éthylhexyle ou l'acrylate de 3-propylheptyle.

8. Plaque multicouche selon l'une des revendications 1 à 7, **caractérisée en ce que** l'isocyanate se base sur des di- et/ou des polyisocyanates ayant une fonctionnalité NCO d'au moins 1,8, d'une manière plus préférée de 1,8 à 5 et d'une manière particulièrement préférée de 2 à 4.

9. Plaque multicouche selon la revendication 8, **caractérisée en ce que** les diisocyanates sont des isocyanates ayant 4 à 20 atomes.

10. Plaque multicouche selon la revendication 8 ou 9, **caractérisée en ce que** les polyisocyanates sont des polyisocyanates présentant des groupes isocyanurate, des diisocyanates d'uret-dione, des polyisocyanates présentant des groupes biuret, des polyisocyanates présentant des groupes uréthane ou allophanate, des polyisocyanates présentant des groupes oxadiazinetrione, des polyisocyanates modifiés par une urétonimine de diisocyanates aliphatiques ayant en tout 6 à 20 atomes, et/ou des diisocyanates cycloaliphatiques ayant en tout 6 à 20 atomes.

11. Plaque multicouche selon l'une des revendications 2 à 8, **caractérisée en ce que** la couche d'âme (20) est un panneau stratifié ; un panneau MDF ; un panneau HDF ; un panneau de matériau à base de bois ou un panneau de PVC.

12. Procédé de fabrication d'un panneau de construction multicouche pour l'intérieur et l'extérieur, comprenant les étapes suivantes :
a. fourniture d'une âme ayant une face avant et une face arrière et
b. disposition d'un papier imprégné d'une résine aminée sur la face avant et/ou sur la face arrière ; **caractérisé en ce que**
c. on applique ensuite sur le papier un mélange d'un isocyanate et d'un (méth)acrylate ;
d. après l'étape c., on applique une couche d'acrylate ; et
e. on durcit ensemble les couches appliquées dans les étapes c. et d., et **en ce que**,
après le durcissement partiel et avant l'étape d., on imprime directement une couche décorative sur la couche comprenant le mélange de l'isocyanate et du (méth)acrylate.

13. Procédé de fabrication d'un panneau de construction multicouche selon la revendication 12, **caractérisé en ce que** le mélange de l'isocyanate et du (méth)acrylate subit un durcissement partiel après l'étape c. et avant l'étape d.

14. Procédé de fabrication d'un panneau de construction multicouche selon l'une des revendications de procédé précédentes, **caractérisé en ce que** le mélange de l'isocyanate et du (méth)acrylate est appliqué à l'aide de rouleaux applicateurs.

15. Procédé de fabrication d'un panneau de construction multicouche selon l'une des revendications de procédé précédentes, **caractérisé en ce que**, après l'étape d. et avant l'étape e., on pourvoit d'une structure la couche d'acrylate appliquée.

16. Procédé de fabrication d'un panneau de construction multicouche selon l'une des revendications de procédé précédentes, **caractérisé en ce que** la couche d'acrylate appliquée dans l'étape d. a une épaisseur supérieure à 20 µm, d'une manière plus préférée supérieure à 30 µm et de la manière la plus préférée supérieure à 40 µm.

17. Procédé de fabrication d'un panneau de construction multicouche selon l'une des revendications de procédé précédentes, **caractérisé en ce que** la couche d'adhérence a une épaisseur de 10 à 100 µm, d'une manière plus préférée de 10 à 80 µm, d'une manière encore plus préférée de 15 à 70 µm et de la manière la plus préférée de 20 à 60 µm.

18. Procédé de fabrication d'un panneau de construction multicouche selon la revendication 12, **caractérisé en ce que** la peinture décorative pour la couche décorative se base sur une peinture décorative polymérisable.

19. Procédé de fabrication d'un panneau de construction multicouche selon l'une des revendications de procédé précédentes, **caractérisé en ce que** l'âme a une épaisseur de 2 à 50 mm, de préférence de 3 à 50 mm et de la manière la plus préférée de 4 à 50 mm.

20. Procédé de fabrication d'un panneau de construction multicouche selon l'une des revendications de procédé précédentes, **caractérisé en ce que** l'âme est un panneau stratifié ; un panneau MDF ; un panneau HDF ; un panneau d'un matériau à base de bois ; ou un panneau de PVC.
